# EUROPÄISCHE PATENTSCHRIFT

(11) **EP 1 342 003 B1**
(45) Veröffentlichungstag und Bekanntmachung des Hinweises auf die Patenterteilung: **22.12.2004**
(21) Anmeldenummer: 01999738.6
(22) Anmeldetag: 30.11.2001
(51) Int. Cl.: F02M 37/10

(54) **VORRICHTUNG ZUR KRAFTSTOFFVERSORGUNG EINER BRENNKRAFTMASCHINE MIT EINEM KRAFTSTOFFILTER**
DEVICE FOR PROVIDING AN INTERNAL COMBUSTION ENGINE WITH FUEL, COMPRISING A FUEL FILTER
DISPOSITIF D'ALIMENTATION EN CARBURANT D'UN MOTEUR A COMBUSTION INTERNE DOTE D'UN FILTRE A CARBURANT

(30) Priorität: 05.12.2000 DE 10060294
(43) Veröffentlichungstag der Anmeldung: 10.09.2003
(73) Patentinhaber: ROBERT BOSCH GMBH, 70442 Stuttgart (DE)
(72) Erfinder: BRAUN, Hans-Peter, 72172 Renfrizhausen (DE); WOERZ, Stefan, 71665 Vaihingen/Enz (DE); WIELAND, Thomas, 70193 Stuttgart (DE); AST, Christian, BR-13026 060 Campinas-SP (BR); FRANIECK, Erwin, 70806 Kornwestheim (DE)
(86) Internationale Anmeldenummer: PCT/DE2001/004501
(87) Internationale Veröffentlichungsnummer: WO 2002/046598

(56) Entgegenhaltungen:
- EP-A- 0 612 919
- EP-A- 0 861 682
- US-A- 4 159 063

## Beschreibung

### Stand der Technik

Die Erfindung geht aus von einer Vorrichtung zur Kraftstoffversorgung einer Brennkraftmaschine mit einem Kraftstoffilter nach der Gattung des Anspruchs 1.

Eine solche Vorrichtung ist durch die EP 0 612 919 A1 bekannt. Diese Vorrichtung weist ein eine Öffnung eines Kraftstoffvorratsbehälters verschließendes Verschlußelement auf, das eine topfförmige Aufnahme aufweist, in die der Kraftstoffilter eingesetzt ist. Die Aufnahme ist von der Außenseite des Kraftstoffvorratsbehälters her mit einem lösbar am Verschlußelement befestigbaren Deckelelement verschließbar. Zwischen dem Deckelelement und dem Verschlußelement ist ein elastischer Dichtring eingespannt, durch den die Aufnahme abgedichtet wird. Der Kraftstoffilter wird von Kraftstoff durchströmt, der durch ein Förderaggregat unter Druck zur Brennkraftmaschine gefördert wird. Der Druck im Fördersystem wird dabei üblicherweise auch bei nicht betriebenem Förderaggregat aufrechterhalten, wobei dieser Druck auch in der Aufnahme des Kraftstoffilters herrscht. Bei einem Wechsel des Kraftstoffilters, zu dem das Deckelelement vom Verschlußelement gelöst wird, kann dabei unter Druck stehender Kraftstoff austreten, wodurch die den Filterwechsel vornehmende Person gefährdet wird und außerdem Brandgefahr verursacht wird.

### Vorteile der Erfindung

Die erfindungsgemäße Vorrichtung zur Kraftstoffversorgung mit den Merkmalen gemäß Anspruch 1 hat demgegenüber den Vorteil, daß beim Lösen des Deckelelements vom Verschlußelement durch den Dichtring die wenigstens eine die Aufnahme mit dem Inneren des Kraftstoffvorratsbehälters verbindende Öffnung freigegeben wird, wodurch ein Druckabbau in den Kraftstoffvorratsbehälter erfolgt, so daß kein unter Druck stehender Kraftstoff aus der Aufnahme nach außen austritt. Somit besteht keine Gefahr für die einen Filterwechsel vornehmende Person und keine Brandgefahr.

In den abhängigen Ansprüchen sind vorteilhafte Ausgestaltungen und Weiterbildungen der erfindungsgemäßen Vorrichtung angegeben.

### Zeichnung

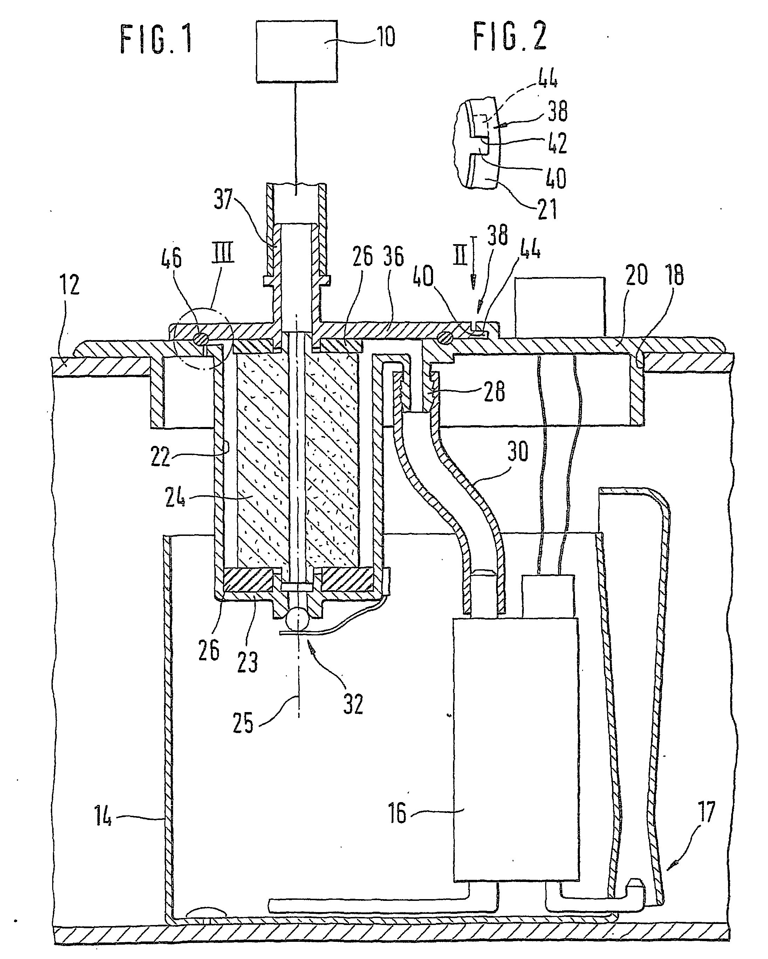

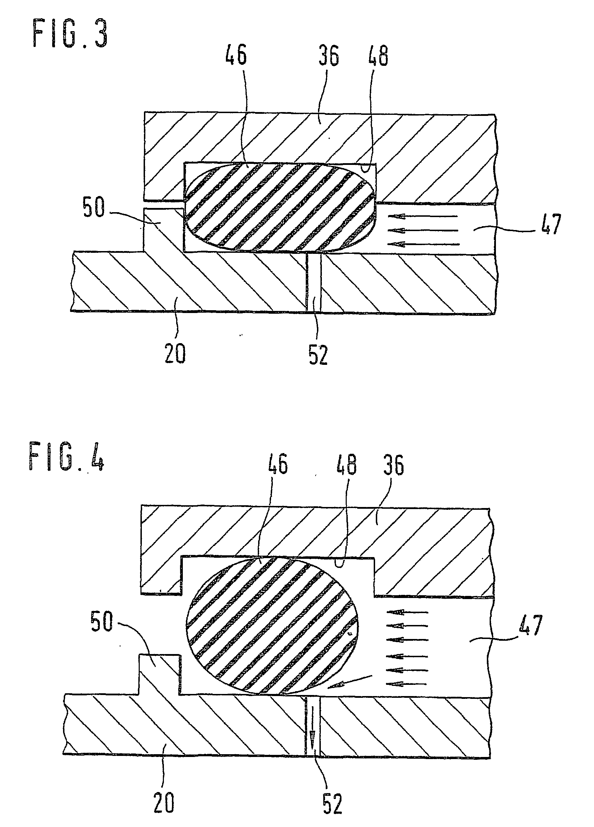

Ein Ausführungsbeispiel der Erfindung ist in der Zeichnung dargestellt und in der nachfolgenden Beschreibung näher erläutert. Es zeigen Figur 1 eine Vorrichtung zur Kraftstoffversorgung einer Brennkraftmaschine in schematischer Darstellung, Figur 2 einen Ausschnitt der Vorrichtung in einer Ansicht gemäß Pfeil II in Figur 1, Figur 3 einen in Figur 1 mit III bezeichneten Ausschnitt in vergrößerter Darstellung bei einem befestigten Deckelelement und Figur 4 den Ausschnitt bei gelöstem Deckelelement.

### Beschreibung des Ausführungsbeispiels

In den Figuren 1 bis 4 ist eine Vorrichtung zur Kraftstoffversorgung einer Brennkraftmaschine 10 eines Kraftfahrzeugs dargestellt. Die Brennkraftmaschine 10 weist eine Einspritzanlage auf, durch die Kraftstoff in die Zylinder der Brennkraftmaschine eingespritzt wird. Das Kraftfahrzeug weist einen Kraftstoffvorratsbehälter 12 auf, in dem ein Staubehälter 14 angeordnet ist. Im Staubhälter 14 ist ein Förderaggregat 16 angeordnet, das aus einem Antriebsteil in Form eines Elektromotors und einem Pumpenteil besteht. Durch das Förderaggregat 16 wird bei dessen Betrieb Kraftstoff aus dem Staubehälter 14 angesaugt und unter Druck zur Brennkraftmaschine 10 gefördert. Aus dem Kraftstoffvorratsbehälter 12 wird mittels einer Strahlpumpe 17 Kraftstoff in den Staubehälter 14 gefördert.

Der Kraftstoffvorratsbehälter 12 weist eine Öffnung 18 auf, durch die der Staubehälter 14 in diesen eingesetzt werden kann. Die Öffnung 18 ist mit einem in nicht näher dargestellter Weise am Kraftstoffvorratsbehälter 12 befestigten flanschförmigen Verschlußelement 20 dicht verschlossen. Am Verschlußelement 20 ist eine in das Innere des Kraftstoffvorratsbehälters 12 gerichtete topfförmige Aufnahme 22 für einen Kraftstoffilter 24 ausgebildet. Die Aufnahme 22 ist zur Außenseite des Kraftstoffvorratsbehälters 12 hin offen. Der Kraftstoffilter 24 ist von der Außenseite des Kraftstoffvorratsbehälters 12 her in die Aufnahme 22 eingesetzt. Der Kraftstoffilter 24 weist an seinem unteren und oberen Endbereich jeweils einen elastisch verformbaren Flansch 26 auf. Wenn der Kraftstoffilter 24 in die Aufnahme 22 eingesetzt ist, so liegen dessen Flansche 26 unter Vorspannung in radialer Richtung an der Umfangswand und am Boden 23 der Aufnahme 22 an und dichten dort ab.

An der in das Innere des Kraftstoffvorratsbehälters 12 weisenden Seite des Verschlußelements 20 ist ein Stutzen 28 angeordnet, der mit der Aufnahme 22 verbunden ist. Auf den Stutzen 28 ist eine hydraulische Leitung 30 aufgeschoben, die mit dem Auslaß des Förderaggregats 16 verbunden ist. Der vom Förderaggregat 16 geförderte Kraftstoff gelangt über die Leitung 30 und den Stutzen 28 auf die Schmutzseite des Kraftstoffilters 24, die zwischen dessen Umfang und der Umfangswand der Aufnahme 22 gebildet ist. Der Kraftstoff durchströmt das Kraftstoffilter 24 radial nach innen zu dessen Sauberseite. Durch die Flansche 26 des Kraftstoffilters 24 erfolgt eine Abdichtung zwischen der Sauberseite und der Schmutzseite. Am Boden 23 der Aufnahme 22 kann ein Überdruckventil 32 angeordnet sein, das bei Überschreiten eines vorgegebenen Drucks auf der Sauberseite des Kraftstoffilters 24 öffnet und Kraftstoff in den Kraftstoffvorratsbehälter 12 abströmen läßt. Das Verschlußelement 20 kann vorzugsweise aus Kunststoff bestehen und durch Spritzgießen hergestellt werden, so daß die Aufnahme 22 und der Stutzen 28 auf einfache Weise einstückig an diesem ausgebildet sein können.

Die Aufnahme 22 ist mit einem Deckelelement 36 verschließbar, das lösbar am Verschlußelement 20 befestigbar ist. Das Deckelelement 36 kann beispielsweise mittels einer Renkverbindung 38 am Verschlueßelement 20 befestigbar sein. Die Renkverbindung 38 kann als Bajonettverschluß ausgebildet sein, wobei am Deckelelement 36 über dessen Umfang verteilt mehrere Bajonetthaken 40 ausgebildet sind, von denen in Figur 1 und 2 nur einer dargestellt ist. Am Verschlußelement 20 ist ein Flansch 21 mit sind entsprechend der Anzahl und Verteilung der Bajonetthaken 40 mehreren radialen Ausnehmungen 42 an dessen Innenrand ausgebildet und in Umfangsrichtung neben diesen sind Rampen 44 an der dem Verschlußelement 20 zugewandten Innenseite des Flansches 21 ausgebildet. Bei der Befestigung des Deckelteils 36 wird dieses in Richtung der Längsachse 25 der Aufnahme 22 an das Verschlußelement 20 angesetzt, in einer Drehlage, in der dessen Bajonetthaken 40 durch die Ausnehmungen 42 hindurchtreten, und anschließend wird das Deckelelement 36 in eine Verriegelungsstellung verdreht, in der dessen Bajonetthaken 40 auf den Rampen 44 aufgleiten, wobei das Deckelelement 36 in Richtung der Längsachse 25 zum Verschlußelement 20 hingezogen wird.

Alternativ kann auch vorgesehen sein, daß das Deckelelement 36 mittels einer Schraubverbindung am Verschlußelement 20 befestigbar ist. Dabei kann das Verschlußelement 20 einen Ansatz mit einem Außengewinde aufweisen und das Deckelelement 36 kann einen Ansatz mit einem Innengewinde aufweisen, der auf das Außengewinde des Verschlußelements 20 aufgeschraubt wird. Beim Aufschrauben des Deckelelements 36 wird dieses in Richtung der Längsachse 25 der Aufnahme 22 zum Verschlußelements 20 hingezogen. Es kann auch vorgesehen sein, daß ein separater Haltering mit einem Innengewinde verwendet wird, der das Deckelteil 36 übergreift und der auf das Außengewinde des Verschlußteils 20 aufgeschraubt wird.

Am Deckelelement 36 ist ein von diesem nach außen abstehender Stutzen 37 angeordnet, wobei das Deckelelement 36 vorzugsweise aus Kunststoff besteht und durch Spritzgießen hergestellt ist und der Stutzen 37 einstückig an diesem angeformt ist. Das Deckelelement 36 liegt unter Vorspannung am oberen Flansch 26 des Kraftstoffilters 24 an und dichtet somit zwischen der Sauberseite und der Schmutzseite des Kraftstoffilters 24 ab. Die Sauberseite des Kraftstoffilters 24 ist mit dem Stutzen 37 verbunden, an den eine zur Brennkraftmaschine 10 führende Leitung angeschlossen ist, durch die der vom Förderaggregat 16 geförderte Kraftstoff zur Brennkraftmaschine 10 gelangt.

Zur Abdichtung der Aufnahme 22 nach außen ist zwischen dem Deckelelement 36 und dem Verschlußelement 20 ein elastischer Dichtring 46 eingespannt. Das Deckelelement 36 liegt dabei über den Dichtring 46 am Verschlußelement 20 an und innerhalb des Dichtrings 46 verbleibt zwischen dem Deckelelement 36 und dem Verschlußelement 20 ein axialer Spalt 47. Der Dichtring 46 kann beispielsweise im Querschnitt eine etwa kreisförmige Grundform aufweisen und aus kraftstoffbeständigem Gummi oder Elastomer bestehen. Das Deckelelement 36 weist auf seiner dem Verschlußelement 20 zugewandten Seite eine umlaufende Ringnut 48 auf, in der der Dichtring 46 angeordnet ist. Das Verschlußelement 20 weist auf seiner dem Deckelelement 36 zugewandten Seite einen umlaufenden Ringsteg 50 auf, der der äußeren Flanke der Ringnut 48 des Deckelelements 36 gegenüberliegt. Anstelle des Ringstegs 50 kann das Verschlußelement 20 ebenfalls eine Ringnut aufweisen, die der Ringnut 48 des Deckelelements 36 gegenüberliegt. Das Verschlußelement 20 weist wenigstens eine Öffnung 52 auf, durch die die Aufnahme 22 mit dem Inneren des Kraftstoffvorratsbehälters 12 verbunden ist. Die wenigstens eine Öffnung 52 ist innerhalb des Dichtrings 46 und direkt neben diesem angeordnet.

Der Dichtring 46 ist zwischen dem Verschlußelement 20 und dem Deckelelement 36 angeordnet und wird bei der Befestigung des Deckelelements 36 infolge von dessen zum Verschlußelement 20 gerichteten Bewegung verspannt und dabei elastisch verformt. In Figur 3 ist das Deckelelement 36 in seiner am Verschlußelement 20 befestigten Stellung dargestellt und der Dichtring 46 ist in seinem elastisch verformten Zustand dargestellt, in dem dieser flach gedrückt ist und somit gegenüber seiner Grundform in radialer Richtung eine größere Ausdehnung besitzt. Der Dichtring 46 überdeckt in diesem elastisch verformten Zustand die wenigstens eine Öffnung 52 des Verschlußelements 20, so daß die Aufnahme 22 nicht mit dem Inneren des Kraftstoffvorratsbehälters 12 verbunden ist. Der vom Förderaggregat 16 unter Druck geförderte Kraftstoff durchströmt somit das Kraftstoffilter 24 und tritt durch den Stutzen 37 aus.

Der Druck im Fördersystem zwischen dem Förderaggregat 16 und der Brennkraftmaschine 10 wird auch dann aufrechterhalten, wenn die Brennkraftmaschine 10 und das Förderaggregat 16 nicht betrieben werden. Dies ermöglicht ein schnelles Starten der Brennkraftmaschine 10. In der Aufnahme 22 herrscht somit ständig gegenüber der Umgebung ein Überdruck. Der Kraftstoffilter 24 kann infolge von Partikeln in dem diesen durchströmenden Kraftstoff, die durch den Kraftstoffilter 24 zurückgehalten werden, damit diese nicht zur Brennkraftmaschine 10 gelangen, verschmutzen, so daß gegebenenfalls ein Austausch des Kraftstoffilters 24 erforderlich ist. Dies ist auf einfache Weise möglich, indem das Deckelelement 36 vom Verschlußelement 20 gelöst und entfernt wird, so daß der Kraftstoffilter 24 aus der Aufnahme 22 entnommen werden kann und ein neuer Kraftstoffilter eingesetzt werden kann.

Beim Lösen des Deckelelements 36 vom Verschlußelement 20 wird dieses vom Verschlußelement 20 wegbewegt, so daß sich der Dichtring 46 in seine etwa kreisförmige Grundform zurückverformt, in der dieser in der Figur 4 dargestellt ist. In seiner Grundform überdeckt der Dichtring 46 die wenigstens eine Öffnung 52 des Verschlußelements 20 nicht, so daß diese freigegeben ist und die Aufnahme 22 über den Spalt 47 und die wenigstens eine Öffnung 52 mit dem Inneren des Kraftstoffvorratsbehälters 12 verbunden ist. Die Aufnahme 22 wird somit beim Lösen des Deckelelements 36 durch die wenigstens eine Öffnung 52 in das Innere des Kraftstoffvorratsbehälters 12 druckentlastet, so daß beim nachfolgenden Entfernen des Deckelelements 36 kein unter Druck stehender Kraftstoff aus der Aufnahme 22 austreten kann.

## Patentansprüche

1. Vorrichtung zur Kraftstoffversorgung einer Brennkraftmaschine mit einem Kraftstoffilter, mit einem eine Öffnung (18) eines Kraftstoffvorratsbehälters (12) verschließenden Verschlußelement (20), das eine zur Außenseite des Kraftstoffvorratsbehälters (12) offene topfförmige Aufnahme (22) aufweist, in die der Kraftstoffilter (24) eingesetzt ist, mit einem Deckelelement (36), durch das die Aufnahme (22) verschließbar ist und das lösbar am Verschlußelement (20) befestigbar ist, und mit einem zwischen dem Verschlußelement (20) und dem Deckelelement (36) eingespannten elastischen Dichtring (46), durch den die Aufnahme (22) abgedichtet wird, **dadurch gekennzeichnet, daß** das Verschlußelement (20) im Bereich des Dichtrings (46) wenigstens eine die Aufnahme (22) mit dem Inneren des Kraftstoffvorratsbehälters (12) verbindende Öffnung (52) aufweist, daß der Dichtring (46) beim Befestigen des Deckelelements (36) am Verschlußelement (20) ausgehend von einer unverformten Grundform derart elastisch verformt wird, daß dieser die wenigstens eine Öffnung (52) verschließt, und daß der Dichtring (46) beim Lösen des Deckelelements (36) vom Verschlußelement (20) sich in seine Grundform zurückverformt, in der dieser die wenigstens eine Öffnung (52) freigibt.

2. Vorrichtung nach Anspruch 1, **dadurch gekennzeichnet, daß** das Deckelelement (36) und/oder das Verschlußelement (20) eine Ringnut (48) aufweist, in der der Dichtring (46) angeordnet ist.

3. Vorrichtung nach Anspruch 1 oder 2, **dadurch gekennzeichnet, daß** das Deckelelement (36) mittels einer Renkverbindung (38) am Verschlußelement (20) befestigbar ist.

4. Vorrichtung nach einem der Ansprüche 1 bis 3, **dadurch gekennzeichnet, daß** die Aufnahme (22) mit unter Druck stehendem Kraftstoff gefüllt ist.

## Claims

1. Apparatus for supplying fuel to an internal combustion engine, having a fuel filter, having a closure element (20) which closes an opening (18) of a fuel reservoir container (12) and has a pot-shaped receptacle (22) which is open towards the outer side of the fuel reservoir container (12) and into which the fuel filter (24) is inserted, having a cover element (36) which can be used to close the receptacle (22) and can be fastened releasably to the closure element (20), and having a resilient sealing ring (46) which is clamped between the closure element (20) and the cover element (36) and seals the receptacle (22), **characterized in that**, in the region of the sealing ring (46), the closure element (20) has at least one opening (52) which connects the receptacle (22) to the interior of the fuel reservoir container (12), **in that**, when the cover element (36) is fastened to the closure element (20), the sealing ring (46) is deformed elastically, starting from a non-deformed basic shape, in such a way that the said sealing ring (46) closes the at least one opening (52), and **in that**, when the cover element (36) is released from the closure element (20), the sealing ring (46) is deformed back into its basic shape, in which shape the said sealing ring (46) opens the at least one opening (52).

2. Apparatus according to Claim 1, **characterized in that** the cover element (36) and/or the closure element (20) have/has an annular groove (48) in which the sealing ring (46) is arranged.

3. Apparatus according to Claim 1 or 2, **characterized in that** the cover element (36) can be fastened to the closure element (20) by means of a bayonet-type connection (38).

4. Apparatus according to one of Claims 1 to 3, **characterized in that** the receptacle (22) is filled with pressurized fuel.

## Revendications

1. Dispositif pour l'alimentation en carburant d'un moteur à combustion interne, comprenant un filtre à carburant, un obturateur (20) qui obture une ouverture (18) d'un réservoir de carburant (12) et qui présente un réceptacle (22) en forme de godet, ouvert vers le côté extérieur du réservoir de carburant (12), dans lequel le filtre à carburant (24) est inséré, un couvercle (36) fermant le réceptacle (22) peut être fermé et qui peut être fixé à l'obturateur (20) de façon démontable, et une bague d'étanchéité élastique (46) serrée entre l'élément obturateur (20) et le couvercle (36), par laquelle le réceptacle (22) est rendu étanche,
**caractérisé en ce que**
obturateur (20) présente, dans la région de la bague d'étanchéité (46), au moins une ouverture (52) qui relie le réceptacle (22) au volume intérieur du réservoir de carburant (12), en partant d'une forme de base non déformée, la bague d'étanchéité (46) est déformée élastiquement lors de la fixation du couvercle (36) sur l'obturateur (20) de telle manière qu'elle obture au moins une ouverture (52), et lorsqu'on détache le couvercle (36) de obturateur (20), la bague d'étanchéité (46) reprend sa forme de base dans laquelle elle libère l'au moins une ouverture (52).

2. Dispositif selon la revendication 1,
**caractérisé en ce que**
le couvercle (36) et/ou l'obturateur (20) présentent une rainure annulaire (48) logeant la bague d'étanchéité (46).

3. Dispositif selon la revendication 1 ou 2,
**caractérisé en ce que**
le couvercle (36) peut être fixé à obturateur (20) au moyen d'une liaison à baïonnette (38).

4. Dispositif selon une des revendications 1 à 3,
**caractérisé en ce que**
le réceptacle (22) est rempli de carburant sous pression.
